# EUROPEAN PATENT SPECIFICATION

(11) **EP 3 605 989 B1**
(45) Date of publication and mention of the grant of the patent: **28.10.2020**
(21) Application number: 17903570.4
(22) Date of filing: 29.09.2017
(51) Int. Cl.: H04L 29/06, H04W 12/12, H04L 9/08, H04W 12/00

(54) **INFORMATION SENDING METHOD, INFORMATION RECEIVING METHOD, APPARATUS, AND SYSTEM**
INFORMATIONSSENDUNGSVERFAHREN, INFORMATIONSEMPFANGSVERFAHREN, VORRICHTUNG UND SYSTEM
PROCÉDÉ D'ENVOI D'INFORMATIONS, PROCÉDÉ DE RÉCEPTION D'INFORMATIONS, APPAREIL ET SYSTÈME

(30) Priority: 01.04.2017 CN 201710213891
(43) Date of publication of application: 05.02.2020
(73) Proprietor: GUANGDONG OPPO MOBILE TELECOMMUNICATIONS CORP., LTD., Wusha, Chang'an Dongguan, Guangdong 523860 (CN)
(72) Inventor: ZHU, Zhonglei, Dongguan Guangdong 523860 (CN)
(74) Representative: Penza, Giancarlo
(86) International application number: PCT/CN2017/104580
(87) International publication number: WO 2018/176781

(56) References cited:
- CN-A- 101 442 409
- CN-A- 101 771 699
- CN-A- 101 964 793
- CN-A- 102 377 560
- CN-A- 107 070 909
- US-A1- 2006 104 441
- US-A1- 2011 099 366
- US-A1- 2015 326 547
- US-A1- 2016 192 194
- US-A1- 2016 359 822
- KHALIL ISSA ET AL: "Consolidated Identity Management System for secure mobile cloud computing", COMPUTER NETWORKS, ELSEVIER, AMSTERDAM, NL, vol. 65, 25 March 2014 (2014-03-25), pages 99-110, XP028646247, ISSN: 1389-1286, DOI: 10.1016/J.COMNET.2014.03.015

## Description

### TECHNICAL FIELD

The present disclosure relates to the field of mobile terminals technologies, and more particular, to an information transmitting method, an information receiving method, a device and a system.

### BACKGROUND

The Find Device Function is an auxiliary function available on the smartphone. When the user cannot find the mobile phone at home or the mobile phone is lost, at least one of the operations of locating, ringing, locking the mobile phone or deleting the data in the smart phone can be performed by the function of finding the mobile phone.

The Find Device Function of the mobile phone requires to be on or off manually. In a typical method for starting such function on a mobile phone, the user inputs a user account and corresponding password to the mobile phone, and the mobile phone encrypts the user account, password, and the mobile phone identity using a symmetric key, and the encrypted user account, password, and mobile phone identity are transmitted to a server. The server also uses a symmetric key to decrypt the user account, password, and the mobile phone identity, and verifies whether the user account matches with the password. When the user account matches the password, the server binds the user account and the mobile phone identity of the mobile phone, and enable the Find Device Function in the mobile phone. The identity of the mobile phone can be represented by International Mobile Equipment Identity (IMEI).

US2015326547 A1 discloses that, data may be protected using a combination of symmetric and asymmetric cryptography. A symmetric key may be generated and the data may be encrypted with the symmetric key. The symmetric key and only a portion of the symmetrically encrypted data may then be encrypted with an asymmetric public key. The entire set of encrypted data, including the asymmetrically encrypted symmetric key, the doubly encrypted portion of data, and the remainder of the symmetrically encrypted data may then be sent to a remote device using insecure communications.

"Consolidated Identity Management System for secure mobile cloud computing" presents the separation of privilege steps used to defeat the threat of IDM server compromise. The user generates, encrypts, signs and sends the session commit value to the IDM server during the login process with the IDM provider. The IDM provider attaches the encrypted session commit value (C) with the token generated for the user to access the CSP. The IDM provider then sends the token together with the encrypted session commit value to the CSP. The user then proves to the CSP that he is the owner of the encrypted session commit value (C) by sending to the CSP the session commit value (M) and the key (K) used to generate C. This proof (M and K) is sent to the CSP confidentially by encrypting it using the public key of the CSP. The CSP then verifies that C is equivalent to the encryption of M using K before granting access to the user. Note that an IDM insider may only possess C but cannot possess M since M is not available to the IDM.

Therefore, our use of the separation of privileges principle perfectly protects the IDM process against possible IDM server compromise vulnerabilities.

US 2016/359822 A1 is related to private electronic data exchange using multi-layered encryption and data and key separation. The invention includes a means to ensure private electronic data exchanges are secure over any medium of transmission utilizing a server which functions include authenticating and identifying users of the server, storing cryptographic keys and governing access to those cryptographic keys. Additionally the invention describes a mechanism by which the client also governs access to the private electronic data using access restrictions set forth by the sender of the private electronic data. Additionally the invention describes a mechanism by which the recipient and sender respectively are able to effectively destroy the transmitted private electronic data by instructing the server to destroy the necessary associated cryptographic key.

US 2011/099366 A1 discloses a method for secure transfer of information through a centralized system. The method comprising: maintaining user account information, a user account of a certain user comprising at least a user id and associated public and private keys, the private key being retrievable by means of a password of said certain user; receiving (411) identification information relating to a recipient; retrieving public key of said recipient from said user account information by means of said identification information; receiving (412) information content addressed to said recipient; storing (415) said information content for said recipient in encrypted form, said retrieved public key having been used in connection with encrypting said information content; and notifying (416) said recipient of the stored information content.

US 2016/192194 A1 discloses a method includes building trust system among internet users, signing up in websites without password and protecting personal data in mobile device. Global Unique Identifier (GUID) is used to identify and accumulate internet credit for users and websites. First, user applies for GUID together with asymmetric-key, then the internet credit of this GUID can be accumulated based on transactions. Also, user can sign on or log in websites via GUID without using password and user name. In addition, dual data encryption and unpredictable random number is presented to anti-surveillance of communication. The personal information in mobile device are protected by asymmetric-key pairs and destroyed automatically after being stolen and mobile device's device-ID is used to chasing the stolen devices. In summary, the present invention is a securer way to build a trust system among internet users and protect data in mobile device.

### SUMMARY

Embodiments of the disclosure provides an information transmitting method, an information receiving method, a device, and a system.

In a first aspect, an information transmitting method is provided. The method comprises:
sending a login request to a service device by using an encrypted connection, wherein the login request includes a user account and a login password;
receiving a login token assigned by the service device after the service device verifies the user account and the login password, wherein the login token has a validity period;
jumping from a login interface to an interface for opening the Find Device Function;
acquiring the login password, a device identity, a mobile phone number, and the login token;
generating plaintext information configured to be transmitted, wherein the login password, the device identity, the mobile phone number, and the login token are combined into the plaintext information;
generating a symmetric key corresponding to the current opening operation;
encrypting the plaintext information by using the symmetric key to obtain first ciphertext information; acquiring an asymmetric cryptographic public key corresponding to the service device;
encrypting the symmetric key by using the asymmetric cryptographic public key to obtain second ciphertext information; and
transmitting the first ciphertext information and the second ciphertext information to the service device, wherein the service device has an asymmetric encrypted private key corresponding to the asymmetric cryptographic public key stored therein, the service device obtains the plaintext information after decrypting the first ciphertext information and the second ciphertext information, and opens the Find Device Function when the login token matches the login password and is within a validity period.

In a second aspect, an information receiving method is provided. The method comprises:
verifying a user account and a login password sent from a terminal device by using an encrypted connection, and feeding back a login token to the terminal device after the verification is successful, wherein the login token has a validity period; the terminal device jumps from a login interface to an interface for opening the Find Device Function, combines the login password, a device identity, a mobile phone number, and the login token into one piece of plaintext information, and obtains first ciphertext information and second ciphertext information by encrypting the plaintext information and a symmetric key corresponding to the current opening operation;
receiving the first ciphertext information and the second ciphertext information;
acquiring an asymmetric encryption private key;
decrypting the second ciphertext information by using the asymmetric encryption private key to obtain the symmetric key; and
decrypting the first ciphertext information by using the symmetric key to obtain the plaintext information; verifying whether the login token matches the login password;
verifying whether the login token is within the validity period, when the login token matches the login password;
opening the Find Device Function and establishing a binding relationship between the device identity and the mobile phone number, when the login token is in the validity period.

In a third aspect, an embodiment of the present disclosure provides an information transmitting device, the device includes:
an acquiring module, configured to acquire plaintext information configured to be transmitted;
a generating module, configured to generate a symmetric key;
an encrypting module, configured to encrypt the plaintext information by using the symmetric key to obtain first ciphertext information, wherein the acquiring module is further configured to acquire an asymmetric cryptographic public key, the encrypting module is further configured to encrypt the symmetric key by using the asymmetric cryptographic public key to obtain second ciphertext information;
a transmitting module, configured to transmit the first ciphertext information and the second ciphertext information to a service device, wherein the service device has an asymmetric encrypted private key corresponding to the asymmetric cryptographic public key stored therein.

In a fourth aspect, an embodiment of the present disclosure provides an information receiving device, the device includes:
a receiving module, configured to receive first ciphertext information and second ciphertext information;
an acquiring module, configured to acquire an asymmetric encrypted private key;
a decrypting module, configured to decrypt the second ciphertext information to obtain a symmetric key,
by using the symmetric encrypted private key;
wherein the decrypting module is further configured to decrypt the first ciphertext information to obtain plaintext information, by using the asymmetric encrypted private key.

In a fifth aspect, a terminal device is provided. The terminal device comprises a processor and a memory. The memory has one or more programs stored therein, the one or more programs are configured to be executed by the processors, to perform the steps of the information transmitting method.

In a sixth aspect, a service device is provided. The service device comprises a processor and a memory. The memory has one or more programs stored therein, the one or more programs are configured to be executed by the processors, to perform the steps of:
receiving first ciphertext information and second ciphertext information;
acquiring an asymmetric encryption private key;
decrypting the second ciphertext information by using the asymmetric encryption private key to obtain a symmetric key; and
decrypting the first ciphertext information by using the symmetric key to obtain plaintext information.

In a seventh aspect, an information transceiving system is provided. The system comprises a service device and a terminal device. The terminal device includes the information transmitting device according to the third aspect, the service device includes the information receiving device according to the fourth aspect; or, the terminal device includes the information transmitting device according to the fifth aspect, the service device includes the information receiving device according to the sixth aspect.

In an eighth aspect, a computer readable storage medium is provided. The computer readable storage medium has one or more programs stored therein, the one or more programs are executed by a processor to implement the steps of:
receiving first ciphertext information and second ciphertext information;
acquiring an asymmetric encryption private key;
decrypting the second ciphertext information by using the asymmetric encryption private key to obtain a symmetric key; and
decrypting the first ciphertext information by using the symmetric key to obtain plaintext information.

### BRIEF DESCRIPTION OF THE DRAWINGS

In order to more clearly illustrate the technical solutions in the embodiments of the present application, the drawings used in the description of the embodiments will be briefly described below. It is obvious that the drawings in the following description are just some embodiments of the present disclosure. Other drawings may also be obtained from those of ordinary skill in the art in light of the inventive work.
FIG.1 is a schematic structural diagram of an information transceiving system provided by an exemplary embodiment of the present application;
FIG. 2 is a flowchart of an information transmitting method provided by an exemplary embodiment of the present application;
FIG. 3 is a flowchart of an information transmitting method provided by another exemplary embodiment of the present application;
FIG. 4A is a schematic diagram showing an interface when implementing an information transmitting method provided by an exemplary embodiment of the present application;
FIG. 4B is a schematic diagram of encryption and decryption of an information transmitting method provided by an exemplary embodiment of the present application;
FIG. 4C is a schematic diagram showing an interface when implementing an information transmitting method provided by an exemplary embodiment of the present application;
FIG. 5 is a structural block diagram of an information transmitting device according to an exemplary embodiment of the present application;
FIG. 6 is a structural block diagram of an information receiving device according to another exemplary embodiment of the present application;
FIG. 7 is a structural block diagram of a terminal device according to an exemplary embodiment of the present application;
FIG. 8 is a structural block diagram of a service device according to another exemplary embodiment of the present application.

### DETAILED DESCRIPTION OF PREFERRED EMBODIMENTS

In order to make the objects, technical solutions and advantages of the disclosure clearer, the embodiments of the disclosure will be further described in detail below with reference to the accompanying drawings.

For ease of understanding, some technical concepts involved in the embodiments of the present application are introduced firstly.

### Symmetric encryption

Symmetric encryption means that the encryption party and the decryption party have the same encryption key X. After the encrypting party encrypts the plaintext information using the encryption key X, the decrypting party decrypts the plaintext information using the same encryption key X. Once the encryption key X is compromised, others can decrypt the plaintext information.

### Asymmetric encryption public/private key

The asymmetric cryptographic public key (the public key for short) refers to the public key, which does not need to be kept secret. The decryption party can obtain it through various channels; the asymmetric cryptographic private key (the private key for short) refers to be owned to just the cryptographic party itself and needs to be kept secret. A public key corresponds to a private key; the public key and the private key together form an asymmetric encryption method. The asymmetric encryption method means that the plaintext information encrypted by the public key can only be decrypted by using the corresponding private key, and the plaintext information encrypted by the private key can only be decrypted by using the corresponding public key. That is, the keys used for encryption and decryption are different.

For example, if the encrypting party wants to send the ciphertext information to the decrypting party, the encrypting party first needs to obtain the public key corresponding to the decrypting party, and then encrypts the plaintext information by using the public key corresponding to the decrypting party, and then sends the ciphertext information to the decryption party. After receiving the ciphertext information sent by the encryption party, the decryption party must use the private key corresponding to the decryption party to decrypt the ciphertext information and obtain the plaintext information. Since the private key corresponding to the decrypting party is owned by the decrypting party only, the ciphertext information sent by the encrypting party is safe.

### Find Device Service

When the user cannot find the terminal device at home or the terminal device is lost, at least one of positioning, ringing, locking, or deleting data is performed on the terminal device by using the Find Device Service. When the terminal device is a mobile phone, it can be called as a find mobile phone service; when the terminal device is a tablet computer, it can be called as a find tablet computer service.

In the find mobile phone function provided by the background art, when a mobile phone is obtained by others such as a malicious person, the symmetric key in the mobile phone is easily leaked or deciphered. At this time, the user account and password will be leaked, and the Find Device Service is invalid. For this, the present application provides the following embodiments.

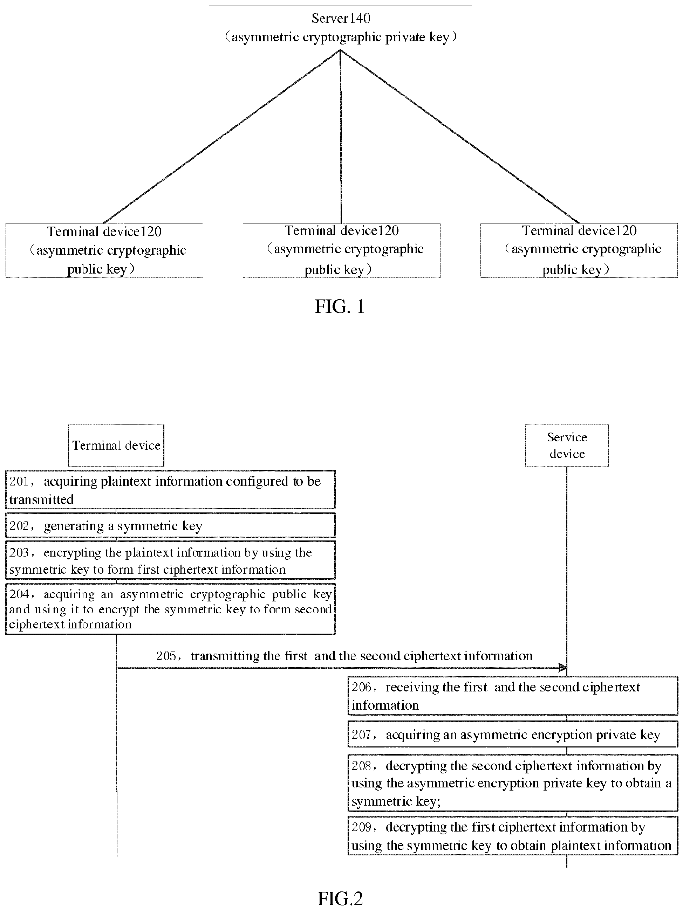

Please refer to FIG. 1, which is a schematic structural diagram of an information transceiving system provided by an exemplary embodiment of the present application. The information transceiving system includes at least one terminal device 120 and a service device 140.

The terminal device 120 can be a mobile phone, a tablet computer, an e-book reader, a Moving Picture Experts Group Audio Layer III (MP3) player, and a Moving Picture Experts Group Audio Layer IV (MP4) player, a laptop, a desktop computer, and the like.

Optionally, the terminal device 120 is provided with a positioning module, which may be at least one of an iBeacon positioning module, a Global Positioning System (GPS) positioning module, and a Wireless Fidelity (WIFI) network positioning module, and a base station positioning module. The terminal device 120 has the ability to locate the geographic location in which it is located to implement the location function in the Find Device Function. The terminal device 120 also has a speaker, and the terminal device 120 has the ability to ring according to a control command to implement a ringing function in the Find Device Function. Optionally, an application for implementing the Find Device Function is installed in the terminal device 120.

Optionally, an asymmetric cryptographic public key corresponding to the service device 140 is stored in the terminal device 120. When there are several terminal devices 120, the asymmetric cryptographic public keys stored in each terminal device 120 may be the same or different. In the embodiment of the present application, taking the asymmetric cryptographic public key stored in each terminal device 120 is the same as an example.

The terminal device 120 and the service device 140 communicate with each other via a wired network or a wireless network. The wireless network includes a data network in mobile communication (ie, packet data domain PS) or a short message network in mobile communication (ie, circuit domain CS).

The service device 140 is a server for providing background services to the terminal device 120, such as find mobile phone service, a data service, or other services.

The service device 140 stores an asymmetric encrypted private key corresponding to the asymmetric encrypted public key. Optionally, the asymmetric encrypted private key is one or more. In the embodiment of the present application, taking the asymmetric encryption private key stored in the service device 140 is just one as an example.

Alternatively, the terminal device 120 is considered to be a first device, or an encrypting device, or an information transmitting device, or an information transmitting apparatus, and the service device 140 is considered to be a second device, or a decrypting device, or an information receiving device, or an information receiving apparatus. In different embodiments, the terminal device and/or the service device may be implemented by other devices, for example, the terminal device is a tablet computer, the service device is a storage service device, and the terminal device is a mobile phone, and the service device is a router or a host. These are not limited in the embodiments of the present application.

Please refer to FIG. 2, which shows a flowchart of an information transmitting method provided by an exemplary embodiment of the present application. This embodiment is exemplified by applying the method to the information transceiving system shown in FIG. 1. The method includes the following steps.

Step 201, the terminal device acquires plaintext information configured to be transmitted.

The terminal device acquires the plaintext information waited to be transmitted, and the plaintext information may be any information.

Step 202, the terminal device generates a symmetric key.

In one embodiment, the symmetric key is not stored in an initial state of the terminal device, and the symmetric key is generated in real time when needing

In one embodiment, the step 202 may be performed prior to or concurrently with the step 201. The embodiment of the present application does not limit the executing orders of the two steps, and does not exclude the implementation manner in which the terminal device stores the symmetric key in advance.

Step 203, the terminal device encrypts the plaintext information by using the symmetric key to obtain first ciphertext information.

Step 204, the terminal device acquires an asymmetric cryptographic public key, and encrypts the symmetric key by using the asymmetric cryptographic public key to obtain second ciphertext information.

There is an asymmetric cryptographic private key corresponding to the asymmetric cryptographic public key, and the asymmetric cryptographic private key is stored in the service device.

The ciphertext encrypted by the asymmetric cryptographic public key needs to be decrypted by the corresponding asymmetric cryptographic private key.

Step 205, the terminal device transmits the first ciphertext information and the second ciphertext information.

Step 206, the service device receives the first ciphertext information and the second ciphertext information.

Step 207, the service device acquires the asymmetric encrypted private key.

In one embodiment, the asymmetric encryption private key is pre-stored in the service device.

Step 208, the service device decrypts the second ciphertext information by using the asymmetric encryption private key to obtain the symmetric key.

Step 209, the service device decrypts the first ciphertext information by using the symmetric key to obtain the plaintext information.

In this embodiment, by the steps of: storing an asymmetric cryptographic public key in the terminal device, generating a symmetric key during encryption, obtaining the first ciphertext information through encrypting the plaintext information by using a symmetric key, and obtaining the second ciphertext information through encrypting the symmetric key by suing the asymmetric cryptographic public key pair, so that even if the asymmetric cryptographic public key in the mobile phone is leaked, due to the characteristics of asymmetric cryptography, others such as a malicious person cannot decrypt the symmetric key, and the plaintext information cannot be decrypted, thereby ensuring the security when interacting information between the terminal device and the service device.

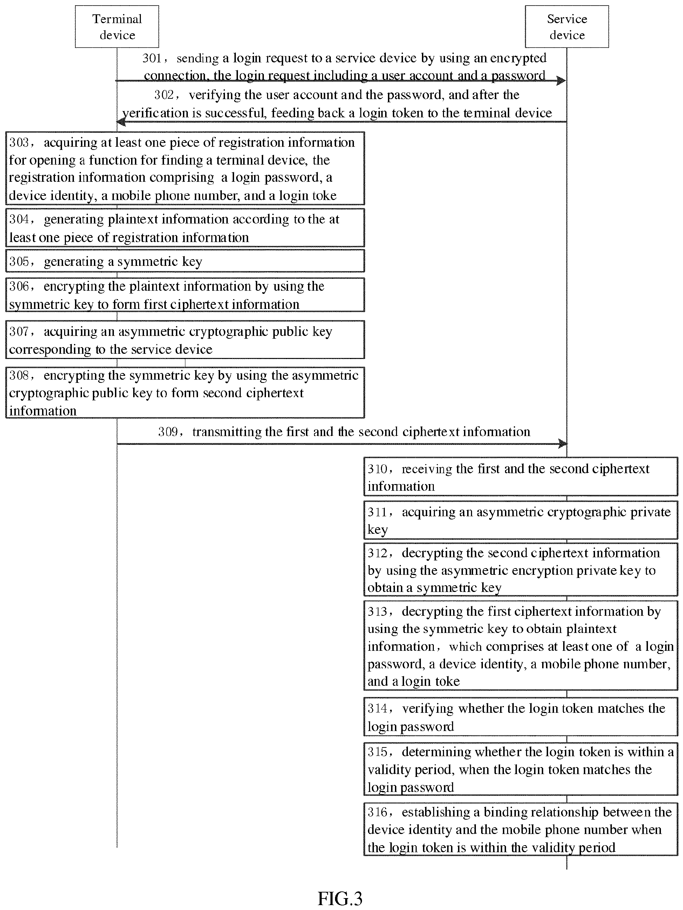

Please refer to FIG. 3, which is a flowchart of an information transmitting method provided by another exemplary embodiment of the present application. This embodiment is exemplified by applying the method to the information transmitting system shown in FIG. 1. The method includes the following steps.

Step 301, the terminal device sends a login request to the service device by using an encrypted connection, wherein the login request includes a user account and a password.

The terminal device establishes an https encrypted connection with the service device when it needs to communicate with the service device. Then, the terminal device generates a login request using the pre-registered user account and password, and sends the login request to the service device.

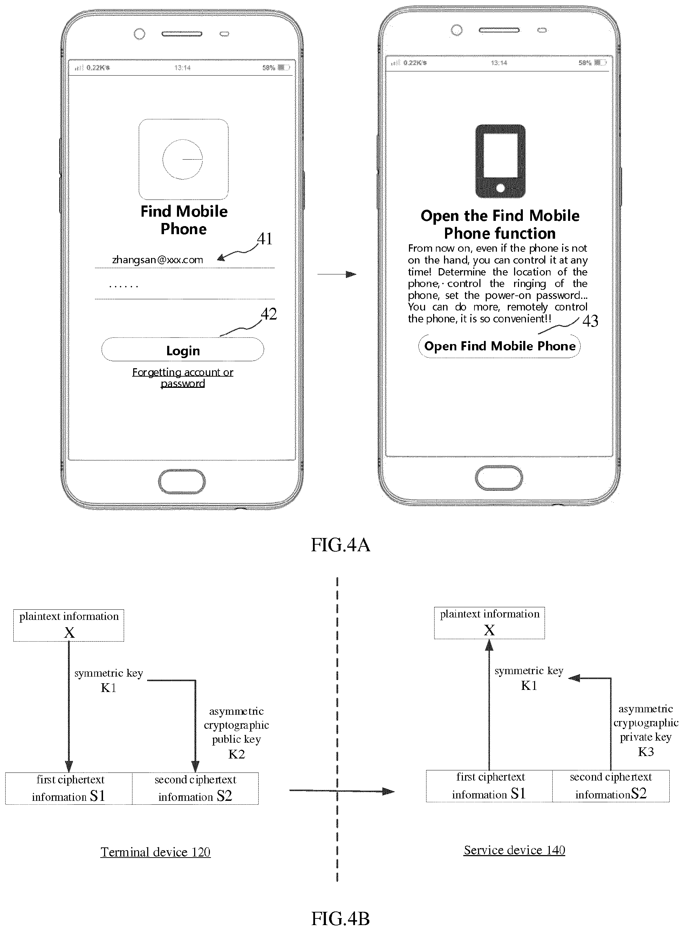

Illustratively, referring to the left side of FIG. 4A, the user inputs the user account zhangsan@xxx.com and the password in an input box 41 in a login interface, and then clicks a "login" button 42, then the terminal sends a login request to the service device.

Correspondingly, the service device receives the login request sent by the terminal through the encrypted connection.

Step 302, the service device verifies the user account and the password, and after the verification is successful, a login token is fed back to the terminal device.

The login token is a digital token that is assigned to the terminal by the service device when the login is successful. The login token usually has a validity period (for example, within 10 minutes). When the terminal device subsequently communicates with the service device, the login token needs to be carried in the information, so that the service device can recognize that the terminal is in a valid login state.

There is a correspondence between the user account, the login password, and the login token. Optionally, each login token also has a corresponding validity period. Table 1 schematically shows the correspondence.

**Table 1**

| user account | login password | login token | validity period |
|---|---|---|---|
| Zhangsan | 128568 | 1F4Gsdfa | 11:02-11:12 |
| Lisi | 865986 | 5548asdf1 | 10:59-11:09 |
| Wangwu | 1155336 | 2146451af | 11:04-11:14 |

Correspondingly, the terminal device stores the login token.

After receiving the login token, the terminal device successfully logs in. Referring to the right side of FIG. 4A, the terminal device jumps from the login interface to an interface for opening the find mobile phone function. If the user wishes to open the find device function, click an "Open Find Mobile Phone" button 43 when the interface for opening the find mobile phone function is opened.

Step 303, the terminal device acquires at least one piece of registration information for opening the Find Device Function, wherein the at least one piece of registration information includes at least one of the login password, the device identity, the mobile phone number, and the login token.

After the user clicks the "Open Find Mobile Phone" button, the terminal device acquires at least one piece of registration information for opening the Find Device Function of the terminal device according to the click operation, and the at least one piece of registration information includes at least one of the login password, the device identity, the mobile phone number, and the login token.

In one embodiment, the device identity is used to identify the terminal device (that is, a first device). When the terminal device is a mobile phone, the device identity may be an International Mobile Equipment Identity (IMEI); the mobile phone number is the number used by the terminal device, the mobile phone number is used to realize the communication in the form of short message between the terminal device and the service device during the using of the find device function; the login token is allocated when the login password is successfully registered, and the token is used to be verified by the service device whether the terminal device is in a valid login state.

Optionally, this embodiment is exemplified by the registration information including the above four types of information.

Step 304, the terminal device generates plaintext information configured to be transmitted, according to at least one of the registration information.

Optionally, the terminal device combines the foregoing four types of information into one piece of plaintext information.

Step 305, the terminal device generates a symmetric key.

In one embodiment, the terminal device generates the symmetric key corresponding to the current opening operation. That is, the symmetric key is dynamically generated each time the mobile phone is checked. Different opening operations correspond to different symmetric keys, or there are different symmetric keys corresponding to at least two opening operations.

Alternatively, the terminal device generates the symmetric key corresponding to the current time period. That is, the symmetric key is dynamically generated for each time period. Different time segments correspond to different symmetric keys, or there are different symmetric keys corresponding to at least two time periods.

Alternatively, the terminal device generates the symmetric key corresponding to the current communication process. That is, each communication process dynamically generates a corresponding symmetric key. Different communication processes correspond to different symmetric keys, or there are different symmetric keys corresponding to at least two communication processes.

Optionally, the terminal device does not store the symmetric key in advance, just stores a symmetric key generation algorithm, and generates the symmetric key in real time when the symmetric key needs to be used, so as to reduce the risk that the symmetric key is leaked.

In one embodiment, the step 303 may be performed prior to the step 302, or may be performed prior to the step 301, or may be performed concurrently with the step 302, or may be performed concurrently with the step 301.

Step 306, the terminal device encrypts the plaintext information by using the symmetric key to obtain first ciphertext information.

As can be seen from FIG. 4B, the terminal device encrypts the plaintext information X by using the symmetric key K1 to obtain the first ciphertext information S1.

Step 307, the terminal device acquires an asymmetric cryptographic public key corresponding to the service device.

In one embodiment, the asymmetric encryption public key K2 is pre-stored in an operating system (or a find device application) of the terminal device. For example, the terminal device stores an asymmetric encryption public key K2 at the time of shipment.

In an embodiment, the service device may send system update information to the terminal device, where the system update information carries an asymmetric encryption public key, the terminal device receives the system update information sent by the service device, and acquires the asymmetric encryption public key from the system update information. The system update information can be delivered by using Over the Air Technology (OTA).

Step 308, the terminal device encrypts the symmetric key by using the asymmetric encryption public key to obtain second ciphertext information.

As can be seen from FIG. 4B, the terminal device encrypts the symmetric key K1 by using the asymmetric encryption public key K2 to obtain the second ciphertext information S2.

In one embodiment, the encryption process of the first ciphertext information and the encryption process of the second ciphertext information are independent from each other, the two encryption processes may be performed simultaneously, or one encryption process may be performed before the other encryption process.

Step 309, the terminal device transmits the first ciphertext information and the second ciphertext information to the service device.

In one embodiment, the terminal device transmits the first ciphertext information S1 and the second ciphertext information S2 to the service device at the same time; in another embodiment, the terminal device transmits the first ciphertext information S1 and the second ciphertext information. S2 to the service device separately.

In one embodiment, the terminal device transmits the first ciphertext information S1 and the second ciphertext information S2 to the service device through a pre-established encrypted connection. The encrypted connection is an https encrypted connection.

Step 310, the service device receives the first ciphertext information and the second ciphertext information.

In one embodiment, the service device simultaneously receives the first ciphertext information S1 and the second ciphertext information S2; in another embodiment, the service device receives the first ciphertext information S1 and the second ciphertext information S2, respectively.

In one embodiment, the service device receives the first ciphertext information S1 and the second ciphertext information S2 over the pre-established encrypted connection.

Step 311, the service device acquires an asymmetric encrypted private key.

The service device acquires an internally stored asymmetric encrypted private key K3.

Step 312, the service device decrypts the second ciphertext information by using the asymmetric encryption private key to obtain the symmetric key.

Referring to FIG. 4B, the service device decrypts the second ciphertext information K2 using the asymmetric encryption private key K3 to obtain the symmetric key K1.

Step 313, the service device decrypts the first ciphertext information by using the symmetric key to obtain the plaintext information, which includes at least one of the login password, the device identity, the mobile phone number, and the login token.

The service device decrypts the first ciphertext information S1 by using the symmetric key K1 to obtain the plaintext information X. The plaintext information X includes at least one piece of information for opening the Find Device Function.

Step 314, the service device verifies whether the login token matches the login password.

The service device stores the correspondence between the user account, the login password, and the login token as shown in Table 1.

The service device verifies whether the received login token matches the login password according to the correspondence between the login password and the login token. When it is matched, a step 315 is performed next; if it is not matched, a failure message is fed back to the terminal device. Correspondingly, the terminal device receives and displays the failure message.

Step 315, when the login token matches the login password, it is verified whether the login token is within the validity period.

When the login token matches the login password, the service device further needs to verify that the login token is within the validity period at the current time. If it is within the validity period, a step 316 is performed next; if the validity period is exceeded, the failure message is fed back to the terminal device, and correspondingly, the terminal device receives and displays the failure message.

In one embodiment, the orders of the step 314 and the step 315 may be interchanged, or the two steps 314 and 315 may be performed simultaneously.

Step 316, a binding relationship between the device identity and the mobile phone number is established, when the login token is in the validity period.

In one embodiment, the service device opens the Find Device Function for the terminal device, and establishes the binding relationship between the user account, the device identity, and the mobile phone number. Table 2 schematically shows the binding relationship as below.

**Table 2**

| user account | device identity(IMEI) | mobile phone number |
|---|---|---|
| Zhangsan | xxxxxx0601472104 | 134xxxx8888 |
| Lisi | xxxxxx121272105 | 135xxxx6666 |
| wangwu | xxxxxx0701472234 | 186xxxx7777 |

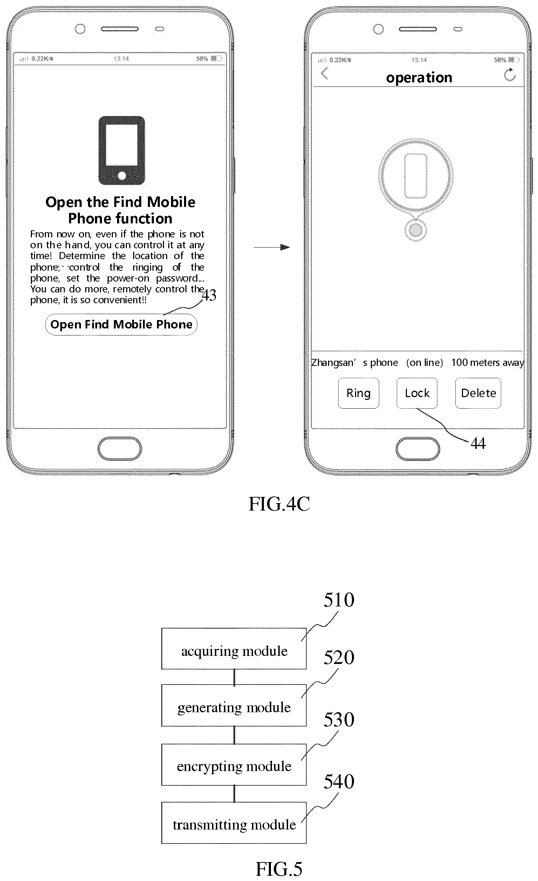

Referring to FIG. 4C, after the service device feeds back to the terminal device an instruction of successfully opening the Find Device Function, the terminal device jumps from the interface for opening the find mobile phone function to an interface for showing the find mobile phone function. The interface for showing the find mobile phone function provides: a location of a searched mobile phone, a name of the searched mobile phone such as "zhangsan's mobile phone", a status of the searched mobile phone such as "on line", and a distance between the searched mobile phone and the current controlling terminal such as "100 meters". If the user wants to lock the "zhang San's mobile phone", then a lock instruction can be transmitted to the service device by clicking a "lock" button 44. In one embodiment, when the terminal device transmits the lock instruction to the service device, just the symmetric key is used for encryption; or the terminal device encrypts the lock instruction by using the same encryption manner as the registration information.

In this embodiment, by the steps of: storing an asymmetric cryptographic public key in a first device; generating a symmetric key during the encryption, obtaining first ciphertext information by encrypting the plaintext information using the symmetric key; and obtaining second ciphertext information by encrypting the symmetric key using an asymmetric cryptographic public key; thus, the security of the information exchange between the devices is ensured. This is because even if the asymmetric encryption public key in the mobile phone is leaked, due to the characteristics of asymmetric encryption, others such as a malicious person cannot decrypt the symmetric key and cannot decrypt the plaintext information.

In one embodiment, if the asymmetrically encrypted private key is only stored in the serving device, the communication between the terminal device and the serve device is safe as long as the asymmetric encrypted private key in the serve device is not leaked.

In one embodiment, the terminal device can continuously update the symmetric key such that each symmetric key is valid just for a period of time, the communication security between the terminal device and the service device is increased.

In one embodiment, when the terminal device generates the symmetric key for each open operation, the terminal device and the service device can continue to use the same symmetric key, during a period from opening the find device function to closing the find device function. It reduces the calculation amount of the terminal device that needs to generate the symmetric key.

In one embodiment, when the terminal device generates the symmetric key for every time period, since the time at which the terminal device uses the find device function is random, the symmetric key generated is undefined. The symmetric key is not only random at the time of generating, but also random at the time of using, thereby enhancing the security of the symmetric key.

In one embodiment, when the terminal device generates the symmetric key for each communication process, the terminal device and the service device can continuously encrypt the information using the same symmetric key in a single communication process, thereby reducing the calculation amount of generating the symmetric key in the terminal device. In two successive communication processes, the information is encrypted by using different symmetric keys to ensure the communication security between the terminal device and the service device.

In one embodiment, the communication security between the terminal device and the service device is further increased due to the use of an https encrypted connection therebetween.

In one embodiment, if there are at least two terminal devices in the information transceiving system, the service device is configured to provide services for the at least two terminal devices. The at least two terminal devices store the same asymmetric encrypted public key, and the service device stores an asymmetric encrypted private key corresponding to the asymmetric encrypted public key. At this time, as long as the asymmetric encrypted private key in the service device is not leaked, each terminal device uses double encryption to communicate with the service device. Moreover, the symmetric keys used by the terminal devices can be different, thereby ensuring the communication between each terminal device and the service device is safe. Even if the symmetric key of one of the terminals is leaked for any possible reason, it will not affect the communication security of other terminals.

In each of the above embodiments, the asymmetric cryptographic public key and the asymmetric cryptographic private key may be interchanged, that is, in the encryption process, the information is encrypted by the asymmetric cryptographic private key; in the decryption process, the information is decrypted by the asymmetric cryptographic public key.

Please refer to FIG. 5, which is a structural block diagram of an information transmitting device provided by an exemplary embodiment of the present application. The information transmitting device can be implemented as all or part of the terminal device by software, hardware, or a combination of both. The information transmitting device includes an acquiring module 510, a generating module 520, an encrypting module 530, and a transmitting module 540.

The acquiring module 510 is configured to implement the functions of the step 201, the step 303, the step 307 and at least one other acquiring step explicit or implicit in the foregoing method embodiments.

The generating module 520 is configured to implement the functions of the step 202, the step 304, the step 305 and at least one other generating step explicit or implicit in the foregoing method embodiments.

The encrypting module 530 is configured to implement the functions of the step 203, the step 204, the step 306, and at least one other encrypting step explicit or implicit in the foregoing method embodiments.

The transmitting module 540 is configured to implement the functions of the step 205, the step 301, the step 309, and at least one other transmitting step explicit or implicit in the foregoing method embodiments.

Optionally, the information transmitting device further includes a receiving module, which is configured to implement the function of the step 302 and at least one other receiving step explicit or implicit in the foregoing method embodiment.

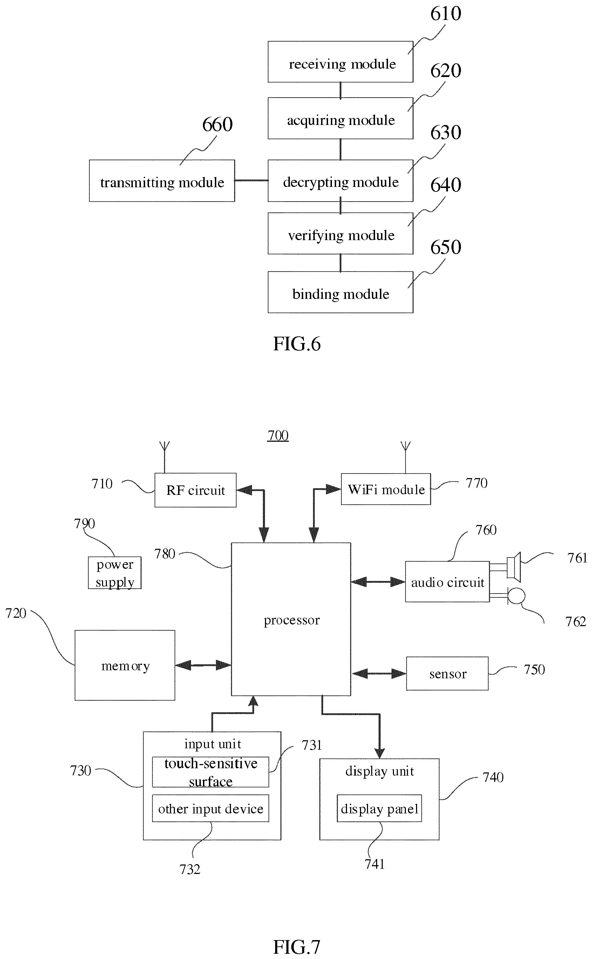

Please refer to FIG. 6, which is a structural block diagram of an information receiving device provided by an exemplary embodiment of the present application. The information receiving device can be implemented as all or part of the service device by software, hardware or a combination of both. The information receiving device includes a receiving module 610, an acquiring module 620, and a decrypting module 630.

The receiving module 610 is configured to implement the functions of the step 206, the step 301, the step 310 and at least one other receiving step explicit or implicit in the foregoing method embodiments.

The acquiring module 620 is configured to implement the functions of the step 207, the step 311, and at least one other acquiring step explicit or implicit in the foregoing method embodiments.

The decrypting module 630 is configured to implement the functions of the step 208, the step 209, the step 312, the step 313 and at least one other decrypting step explicit or implicit in the foregoing method embodiments.

Optionally, the device further includes a verifying module 640, a binding module 650, and a receiving module 660.

The verifying module 640 is configured to implement the functions of the step 208, the step 209, the step 312, the step 313 and at least one other verification step explicit or implicit in the foregoing method embodiments.

The binding module 650 is configured to implement the functions of the step 316 and at least one other binding step explicit or implicit in the foregoing method embodiments.

The receiving module 660 is configured to implement the functions of the step 302 and at least one other receiving step explicit or implicit in the foregoing method embodiments.

It should be noted that, the information transmitting device provided in the above embodiments is exemplified by the division of functional modules described above during the encrypting process, and the information receiving device provided in the above embodiments is exemplified by the division of functional modules described above during the decrypting process. In actual applications, the functions may be allocated to be realized by different modules. That is, the internal structure of the device can be divided into different functional modules to complete all or part of the functions described above. In addition, the first device and the second device provided by the foregoing embodiments are in the same concept as the corresponding method embodiments, and the specific implementation process is described in detail in the method embodiments, and details are not described herein again.

Referring to FIG. 7, which is a schematic structural diagram of a terminal device provided by an embodiment of the disclosure. The terminal is configured to implement the information transmitting method or the information receiving method provided in the above embodiments.

Specifically, the terminal 700 may include a radio frequency (RF) circuit 710, a memory 720 having one or more computer readable storage media, an input unit 730, a display unit. 740, a sensor 750, an audio circuit 760, a wireless fidelity (WiFi) module 770, a processor 780 having one or more processing cores, and a power supply 790 and the like. It will be understood by those skilled in the art that the structure of the terminal as shown in FIG. 7 does not constitute a limitation to the terminal, and the terminal may include more or less components than those illustrated, or a combination of certain components, or different component arrangements.

The RF circuit 710 can be used for transmitting and receiving messages, or transmitting and receiving signals during a call. Specifically, after receiving downlink information of a base station, the downlink information is processed by one or more processors 780. In addition, the data related to the uplink is sent to the base station. Generally, the RF circuit 77 includes, but is not limited to, an antenna, at least one amplifier, a tuner, one or more oscillators, a Subscriber Identity Module (SIM) card, a transceiver, a coupler, a low noise amplifier (LNA), and a duplexer, etc. In addition, the RF circuit 77 can also communicate with the network and other devices through wireless communication. The wireless communication may use any communication standard or protocol, including but not limited to Global System of Mobile communication (GSM), General Packet Radio Service (GPRS), Code Division Multiple Access (CDMA), Wideband Code Division Multiple Access (WCDMA), Long Term Evolution (LTE), e-mail, Short Messaging Service (SMS), and the like.

The memory 720 can be used to store software programs and modules, and the processor 780 executes various functional applications and processing data by running software programs and modules stored in the memory 720. The memory 720 may mainly include a storage program area and a storage data area, wherein the storage program area may store an operating system, applications required for at least one function (such as a sound playing function, an image playing function, etc.), and the like. The storage data area may store the data created using the terminal (such as audio data, phone book, etc.). Moreover, the memory 720 can include high speed random access memory, and can also include non-volatile memory, such as at least one magnetic disk storage device, flash memory device, or other volatile solid state storage device. Accordingly, the memory 720 may also include a memory controller to provide the access to the memory 720 by the processor 780 and the input unit 730.

The input unit 730 can be used to receive input numeric or character information, as well as to generate signal inputs related to user settings and function controls, via a keyboard, a mouse, a joystick, optics or a trackball. In particular, in one particular embodiment, the input unit 730 can include a touch-sensitive surface 731 as well as other input devices 732. The touch-sensitive surface 731, also known as touch screens or trackpads, collects touch operations on or near it by a user (such as the user using a finger, stylus, etc., any suitable object or accessory operates on the touch-sensitive surface or near the touch-sensitive surface 731), and drives the corresponding connecting device according to a preset program. Alternatively, the touch sensitive surface 731 may include two parts of a touch detection device and a touch controller. Wherein, the touch detection device detects the touch orientation of the user, detects a signal brought by the touch operation, transmits the signal to the touch controller; the touch controller receives the touch information from the touch detection device, converts the touch information into contact coordinates, and sends the touch information to the processor 780, and can receive commands from the processor 780 and execute them. In addition, the touch-sensitive surface 731 can be implemented in a variety of types, including resistive, capacitive, infrared, and surface acoustic waves. In addition to the touch-sensitive surface 731, the input unit 730 can also include other input devices 732. Specifically, other input devices 732 may include, but are not limited to, one or more of a physical keyboard, function keys (such as volume control buttons, switch buttons, etc.), a trackball, a mouse, a joystick, and the like.

The display unit 740 can be used to display information input by the user or information provided to the user, as well as various graphical user interfaces of the terminal device 700, which can be composed of graphics, text, icons, videos, and any combination thereof. The display unit 740 can include a display panel 741. Alternatively, the display panel 741 can be configured in the form of a Liquid Crystal Display (LCD), an Organic Light-Emitting Diode (OLED), or the like. Further, the touch-sensitive surface 731 can cover the display panel 741, and when the touch-sensitive surface 731 detects a touch operation thereon or nearby, it is transmitted to the processor 780to determine the type of the touch event, and then the processor 780 provides a visible output to the display panel 741 according to the type of the touch event. Although in FIG. 7, the touch-sensitive surface 731 and the display panel 741 are implemented as two separate components to perform input and output functions, in some embodiments, the touch-sensitive surface 731 can be integrated with the display panel 741 to implement input and output functions.

The terminal also can include at least one type of the sensor 750, such as a light sensor, a motion sensor, and other sensors. Specifically, the light sensor may include an ambient light sensor and a proximity sensor, wherein the ambient light sensor may adjust the brightness of the display panel 741 according to the brightness of the ambient light, and the proximity sensor may close the display panel 741 and/or the backlight when the terminal 700 moves to the ear of the user. As a kind of motion sensor, a gravity acceleration sensor can detect the magnitude of acceleration in all directions (usually three axes). When it is stationary, it can detect the magnitude and direction of gravity. It can be used to identify the gesture of the mobile phone (such as horizontal and vertical screen switching, related games, magnetometer attitude calibrations), vibration recognition related functions (such as a pedometer, the tapping), etc.. Other sensors such as gyroscopes, barometers, hygrometers, thermometers, infrared sensors, etc., also can be disposed in the terminal and are not detailed here.

The audio circuit 760, a speaker 761, and a microphone 762 can provide an audio interface between the user and the terminal 700. The audio circuit 760 can convert the received audio data into electrical signals and transmit the electrical signals to the speaker 761, the speaker 761 converts the electrical signals into sound signals and output the sound signals. On the other hand, the microphone 762 converts the collected sound signals into electrical signals, the electrical signals are received by the audio circuit 760 and then converted into audio data, the audio data is then processed by the processor 780, and then is sent to another terminal via the RF circuitry 710, for example, or the audio data is output to memory 720 for further processing. The audio circuit 760 may also include an earbud jack to provide communication between the peripheral earphone and the terminal 700.

WiFi is a short-range wireless transmission technology, and the terminal device 700 can help users to send and receive emails, browse web pages, and access streaming media through the WiFi module 770, which provides wireless broadband internet access for users. Although FIG. 7 shows the WiFi module 770, it can be understood that it is not the necessary configuration of the terminal, and may be omitted as needed within the scope of not changing the essence of the disclosure.

The processor 780 is the control center of the terminal device 700, which connects various portions of the entire terminal using various interfaces and lines, by performing or executing software programs and/or modules stored in the memory 720, and by invoking data stored in the memory 720, thereby implementing the various functions of the terminal and processing data to monitor the terminal device 700. Optionally, the processor 780 may include one or more processing cores. Optionally, the processor 780 may integrate an application processor and a modem processor, where the application processor mainly processes the operating system, the user interfaces, the applications, and the like, and the modem processor primarily handles wireless communications. It will be appreciated that the above described modem processor may also not be integrated into the processor 780.

The terminal also includes the power supply 790 (such as a battery) that supplies power to the various components. Optionally, the power supply 790 can be logically coupled to the processor 780 through a power management system to manage functions such as charging, discharging, and power management through the power management system. The power supply 790 may also include one or more of DC or AC power source, a recharging system, a power failure detection circuit, a power converter or inverter, a power status indicator, and the like.

Although not shown, the terminal device 700 may further include a camera, a Bluetooth module, and the like, and details are not described herein again. Specifically, in this embodiment, the display unit of the terminal device 700 is a touch screen display, the terminal device 700 further includes a memory and one or more programs stored in the memory and executable for the processor. The one or more programs includes instructions configured to perform operations of the above information transmitting methods.

In an exemplary embodiment, a non-transitory computer readable storage medium having instructions is also provided, such as a memory comprising instructions executable by a processor of a terminal to perform the various steps of the above information transmitting method embodiments as shown in FIG. 2 or FIG. 3. For example, the non-transitory computer readable storage medium may be a read only memory (ROM), a random access memory (RAM), a CD-ROM, a magnetic disk, or an optical disk.

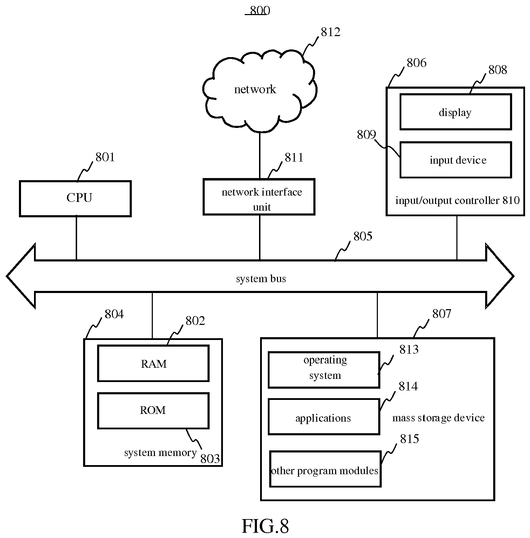

Please refer to FIG. 8, which is a schematic structural diagram of a service device provided by an exemplary embodiment of the present application. The service device can be used to implement the information transmitting method or the information receiving method provided in the above embodiments. The service device 800 includes a central processing unit (CPU) 801, a system memory 804 including a random access memory (RAM) 802 and a read only memory (ROM) 803, and a system bus 805 that connects the system memory 804 and the central processing unit 801. The service device 800 further includes a basic input/output system (I/O system) 806 that facilitates the transmission of information between components within the computer, and a mass storage device 807 configured for storing an operating system 813, applications 814, and other program modules 815.

The basic input/output system 806 includes a display 808 for displaying information and an input device 809 such as a mouse or a keyboard for user to input information. The display 808 and the input device 807 are both connected to the central processing unit 801 via an input/output controller 810, which is coupled to the system bus 805. The basic input/output system 806 can also include the input/output controller 810 for receiving and processing input from many other devices, such as a keyboard, a mouse, or an electronic stylus. Similarly, the input/output controller 810 also provides output to a display screen, a printer, or other types of output devices.

The mass storage device 807 is connected to the central processing unit 801 by a mass storage controller (not shown) connected to the system bus 805. The mass storage device 807 and its associated computer readable medium provide non-volatile storage for the service device 800. That is, the mass storage device 807 can include a computer readable medium (not shown) such as a hard disk or a CD-ROM drive.

Generally, the computer readable medium can include computer storage media and communication media. The computer storage media include media of volatile and nonvolatile, removable and non-removable that implemented in any method or technology and configured for storing information such as computer readable instructions, data structures, program modules or other data. Computer storage media include RAM, ROM, EPROM, EEPROM, flash memory or other solid state storage technologies, CD-ROM, DVD or other optical storage, tape cartridges, magnetic tape, magnetic disk storage or other magnetic storage devices. Of course, those skilled in the art will appreciate that the computer storage medium is not limited to the above. The system memory 804 and the mass storage device 807 described above may be collectively referred to as memory.

According to various embodiments of the disclosure, the service device 800 may also be operated by a remote computer connected to a network 812 such as the Internet. That is, the service device 800 can be connected to the network 812 through a network interface unit 811 connected to the system bus 805, or can be connected to other types of networks or remote computer systems using the network interface unit 811 (not shown).

The memory further includes one or more programs, the one or more programs are stored in the memory and configured to perform the information transmitting method provided by the above embodiments.

Those skilled in the art may understand that, all or part of the steps of the service device side in the information transmitting method of the embodiments of FIG. 2 or FIG. 3 may be completed by a program to instruct related hardware, and the program may be stored in a computer readable storage medium, which may include a read only memory (ROM), a random access memory (RAM), a magnetic disk or an optical disk. That is, the computer readable storage medium stores one or more computer programs, which are configured to, when executed by the processor, perform the steps on the service device side in the information transmitting method of the embodiments of FIG. 2 or FIG. 3.

The serial numbers of the embodiments of the present application are merely for the description, and do not mean good or bad of the embodiments.

Those skilled in the art may understand that all or part of the steps of implementing the above embodiments may be completed by hardware, or may be instructed by a program to execute related hardware, and the program may be stored in a computer readable storage medium. The storage medium mentioned may be a read only memory, a magnetic disk or an optical disk or the like.

## Claims

1. An information transmitting method, comprising a terminal device:
sending (301) a login request to a service device by using an encrypted connection, wherein the login request includes a user account and a login password;
receiving a login token assigned by the service device after the service device verifies the user account and the login password, wherein the login token has a validity period;
jumping from a login interface to an interface for opening the Find Device Function;
acquiring (303) the login password, a device identity, a mobile phone number, and the login token;
generating (304) plaintext information configured to be transmitted, wherein the login password, the device identity, the mobile phone number, and the login token are combined into the plaintext information;
generating (305) a symmetric key corresponding to the current opening operation;
encrypting (306) the plaintext information by using the symmetric key to form first ciphertext information;
acquiring (307) an asymmetric cryptographic public key corresponding to the service device;
encrypting (308) the symmetric key by using the asymmetric cryptographic public key to form second ciphertext information; and
transmitting (309) the first ciphertext information and the second ciphertext information to the service device, wherein the service device stores an asymmetric encrypted private key corresponding to the asymmetric cryptographic public key, the service device obtains the plaintext information after decrypting the first ciphertext information and the second ciphertext information, and opens the Find Device Function when the login token matches the login password and is within a validity period.

2. The method according to claim 1, wherein acquiring (307) an asymmetric cryptographic public key corresponding to the service device comprises:
acquiring a pre-stored asymmetric cryptographic public key.

3. The method according to claim 1, wherein acquiring (307) an asymmetric cryptographic public key corresponding to the service device comprises:
acquiring system update information; and
finding an asymmetric cryptographic public key from the system update information.

4. The method according to any one of claims 1-3, wherein there are different symmetric keys corresponding to at least two opening operations.

5. The method according to any one of claims 1-4, wherein the first ciphertext information and the second ciphertext information are transmitted to the service device at the same time.

6. The method according to any one of claims 1 to 5, wherein transmitting (309) the first ciphertext information and the second ciphertext information to the service device comprises:
transmitting the first ciphertext information and the second ciphertext information to a service device by using a pre-established encrypted connection.

7. The method according to claim 6, wherein the pre-established encrypted connection is an https encrypted connection.

8. An information receiving method, comprising a service device:
verifying (302) a user account and a login password sent from a terminal device by using an encrypted connection, and feeding back a login token to the terminal device after the verification is successful, wherein the login token has a validity period; the terminal device jumps from a login interface to an interface for opening the Find Device Function, combines the login password, a device identity, a mobile phone number, and the login token into one piece of plaintext information, and obtains first ciphertext information and second ciphertext information by encrypting the plaintext information and a symmetric key corresponding to the current opening operation;
receiving (310) the first ciphertext information and the second ciphertext information;
acquiring (311) an asymmetric encryption private key;
decrypting (312) the second ciphertext information by using the asymmetric encryption private key to obtain the symmetric key; and
decrypting (313) the first ciphertext information by using the symmetric key to obtain the plaintext information;
verifying (314) whether the login token matches the login password;
verifying (315) whether the login token is within the validity period, when the login token matches the login password;
opening the Find Device Function and establishing (316) a binding relationship between the device identity and the mobile phone number, when the login token is in the validity period.

9. The method according to claim 8, wherein the first ciphertext information and the second ciphertext information are received simultaneously.

10. The method according to claim 8, further comprising:
feeding back a failure message to a terminal device when the login token fails to match the login password.

11. The method according to claim 10, further comprising:
feeding back another failure message to the terminal device when the login token is not in the validity period.

12. The method according to any one of claims 8-11, before acquiring (311) an asymmetric encryption private key, the method further comprising:
acquiring system update information, wherein the system update information carries an asymmetric encrypted public key corresponding to the asymmetric encrypted private key.

13. The method according to any one of claims 8-12, wherein receiving (310) the first ciphertext information and the second ciphertext information comprises:
receiving the first ciphertext information and the second ciphertext information by using a pre-established encrypted connection.

14. The method according to claim 13, wherein the pre-established encrypted connection is an https encrypted connection.

15. A terminal device (700), comprising a processor (780) and a memory (720), wherein the memory (720) has one or more programs stored therein, the one or more programs being configured to be executed by the processor (780) to perform the information transmitting method of any one of claims 1-7.

## Patentansprüche

1. Informationsübertragungsverfahren, umfassend eine Endgeräteeinrichtung:
Senden (301) einer Login-Anforderung an eine Serviceeinrichtung durch Verwenden einer verschlüsselten Verbindung, wobei die Login-Anforderung einen Benutzer-Account und ein Login-Passwort enthält;
Empfangen eines durch die Serviceeinrichtung zugewiesenen Login-Tokens, nachdem die Serviceeinrichtung den Benutzer-Account und das Login-Passwort verifiziert, wobei das Login-Token eine Gültigkeitsperiode aufweist;
Springen von einer Login-Schnittstelle zu einer Schnittstelle zum Öffnen der Find Device Function;
Erfassen (303) des Login-Passworts, einer Einrichtungsidentität, einer Mobiltelefonnummer und des Login-Tokens;
Generieren (304) von Klartextinformationen, die dazu ausgebildet sind, übertragen zu werden, wobei das Login-Passwort, die Einrichtungsidentität, die Mobiltelefonnummer und das Login-Token zu den Klartextinformationen kombiniert werden;
Generieren (305) eines symmetrischen Schlüssels entsprechend der aktuellen Öffnungsoperation;
Verschlüsseln (306) der Klartextinformationen durch Verwenden des symmetrischen Schlüssels, um erste Geheimtextinformationen zu bilden;
Erfassen (307) eines asymmetrischen kryptografischen öffentlichen Schlüssels entsprechend der Serviceeinrichtung;
Verschlüsseln (308) des symmetrischen Schlüssels durch Verwenden des asymmetrischen kryptografischen öffentlichen Schlüssels, um zweite Geheimtextinformationen zu bilden; und
Übertragen (309) der ersten Geheimtextinformationen und der zweiten Geheimtextinformationen an die Serviceeinrichtung, wobei die Serviceeinrichtung einen asymmetrischen verschlüsselten privaten Schlüssel entsprechend dem asymmetrischen kryptografischen öffentlichen Schlüssel speichert, und die Serviceeinrichtung die Klartextinformationen nach dem Entschlüsseln der ersten Geheimtextinformationen und der zweiten Geheimtextinformationen erhält und die Find Device Function öffnet, wenn das Login-Token dem Login-Passwort entspricht und sich innerhalb einer Gültigkeitsperiode befindet.

2. Verfahren nach Anspruch 1, wobei das Erfassen (307) eines asymmetrischen kryptografischen öffentlichen Schlüssels entsprechend der Serviceeinrichtung umfasst:
Erfassen eines im Voraus gespeicherten asymmetrischen kryptografischen öffentlichen Schlüssels.

3. Verfahren nach Anspruch 1, wobei das Erfassen (307) eines asymmetrischen kryptografischen öffentlichen Schlüssels entsprechend der Serviceeinrichtung umfasst:
Erfassen von Systemaktualisierungsinformationen; und
Finden eines asymmetrischen kryptografischen öffentlichen Schlüssels aus den Systemaktualisierungsinformationen.

4. Verfahren nach einem der Ansprüche 1-3, wobei es verschiedene symmetrische Schlüssel entsprechend mindestens zwei Öffnungsoperationen gibt.

5. Verfahren nach einem der Ansprüche 1-4, wobei die ersten Geheimtextinformationen und die zweiten Geheimtextinformationen zur gleichen Zeit an die Serviceeinrichtung übertragen werden.

6. Verfahren nach einem der Ansprüche 1 bis 5, wobei das Übertragen (309) der ersten Geheimtextinformationen und der zweiten Geheimtextinformationen an die Serviceeinrichtung umfasst:
Übertragen der ersten Geheimtextinformationen und der zweiten Geheimtextinformationen an eine Serviceeinrichtung unter Verwenden einer im Voraus hergestellten verschlüsselten Verbindung.

7. Verfahren nach Anspruch 6, wobei die im Voraus hergestellte verschlüsselte Verbindung eine httpsverschlüsselte Verbindung ist.

8. Informationsempfangsverfahren, umfassend eine Serviceeinrichtung:
Verifizieren (302) eines Benutzer-Accounts und eines Login-Passworts, von einer Endgeräteeinrichtung gesendet, durch Verwenden einer verschlüsselten Verbindung und Rückkoppeln eines Login-Tokens an die Endgeräteeinrichtung, nachdem die Verifikation erfolgreich ist, wobei das Login-Token eine Gültigkeitsperiode aufweist; die Endgeräteeinrichtung von einer Login-Schnittstelle zu einer Schnittstelle zum Öffnen der Find Device Function springt, das Login-Passwort, eine Einrichtungsidentität, eine Mobiltelefonnummer und das Login-Token in ein Element von Klartextinformationen kombiniert und erste Geheimtextinformationen und zweite Geheimtextinformationen erhält durch Verschlüsseln der Klartextinformationen und eines symmetrischen Schlüssels entsprechend der aktuellen Öffnungsoperation;
Empfangen (310) der ersten Geheimtextinformationen und der zweiten Geheimtextinformationen;
Erfassen (311) eines für eine asymmetrische Verschlüsselung vorgesehenen privaten Schlüssels;
Entschlüsseln (312) der zweiten Geheimtextinformationen durch Verwenden des für eine asymmetrische Verschlüsselung vorgesehenen privaten Schlüssels, um den symmetrischen Schlüssel zu erhalten; und
Entschlüsseln (313) der ersten Geheimtextinformationen durch Verwenden des symmetrischen Schlüssels, um die Klartextinformationen zu erhalten;
Verifizieren (314), ob das Login-Token dem Login-Passwort entspricht;
Verifizieren (315), ob sich das Login-Token innerhalb der Gültigkeitsperiode befindet, wenn das Login-Token dem Login-Passwort entspricht;
Öffnen der Find Device Function und Herstellen (316) einer Bindungsbeziehung zwischen der Einrichtungsidentität und der Mobiltelefonnummer, wenn sich das Login-Token innerhalb der Gültigkeitsperiode befindet.

9. Verfahren nach Anspruch 8, wobei die ersten Geheimtextinformationen und die zweiten Geheimtextinformationen simultan empfangen werden.

10. Verfahren nach Anspruch 8, weiterhin umfassend:
Rückkoppeln einer Fehlernachricht an eine Endgeräteeinrichtung, wenn das Login-Token nicht dem Login-Passwort entspricht.

11. Verfahren nach Anspruch 10, weiterhin umfassend:
Rückkoppeln einer anderen Fehlernachricht an die Endgeräteeinrichtung, wenn sich das Login-Token nicht in der Gültigkeitsperiode befindet.

12. Verfahren nach einem der Ansprüche 8-11, vor dem Erfassen (311) eines für eine asymmetrische Verschlüsselung vorgesehenen privaten Schlüssels, wobei das Verfahren weiterhin umfasst:
Erfassen von Systemaktualisierungsinformationen, wobei die Systemaktualisierungsinformationen einen asymmetrischen verschlüsselten öffentlichen Schlüssel entsprechend dem asymmetrischen verschlüsselten privaten Schlüssel führen.

13. Verfahren nach einem der Ansprüche 8-12, wobei das Empfangen (310) der ersten Geheimtextinformationen und der zweiten Geheimtextinformationen umfasst:
Empfangen der ersten Geheimtextinformationen und der zweiten Geheimtextinformationen unter Verwenden einer im Voraus hergestellten verschlüsselten Verbindung.

14. Verfahren nach Anspruch 13, wobei die im Voraus hergestellte verschlüsselte Verbindung eine httpsverschlüsselte Verbindung ist.

15. Endgeräteeinrichtung (700), umfassend einen Prozessor (780) und einen Speicher (720), wobei in dem Speicher (720) ein oder mehrere Programme gespeichert sind, wobei das eine oder die mehreren Programme dazu ausgebildet sind, durch den Prozessor (780) durchgeführt zu werden, um das Informationsübertragungsverfahren nach einem der Ansprüche 1-7 auszuführen.

## Revendications

1. Procédé de transmission d'informations, qui comprend un dispositif terminal :
l'envoi (301) d'une demande d'ouverture de session à un dispositif de service en utilisant une connexion chiffrée, dans lequel la demande d'ouverture de session inclut un compte utilisateur et un mot de passe d'ouverture de session ;
la réception d'un jeton d'ouverture de session attribué par le dispositif de service après que le dispositif de service vérifie le compte utilisateur et le mot de passe d'ouverture de session, dans lequel le jeton d'ouverture de session présente une période de validité ;
le passage d'une interface d'ouverture de session à une interface permettant d'ouvrir la fonction Find Device « recherche de dispositif » ;
l'acquisition (303) du mot de passe d'ouverture de session, d'une identité de dispositif, d'un numéro de téléphone mobile et du jeton d'ouverture de session ;
la génération (304) d'informations de texte en clair configurées pour être transmises, dans lequel le mot de passe d'ouverture de session, l'identité de dispositif, le numéro de téléphone mobile et le jeton d'ouverture de session sont combinés dans les informations de texte en clair ;
la génération (305) d'une clé symétrique correspondant à l'opération d'ouverture en cours ;
le chiffrement (306) des informations de texte en clair en utilisant la clé symétrique pour former des premières informations de texte chiffré ;
l'acquisition (307) d'une clé publique cryptographique asymétrique correspondant au dispositif de service ;
le chiffrement (308) de la clé symétrique en utilisant la clé publique cryptographique asymétrique pour former des secondes informations de texte chiffré ; et
la transmission (309) des premières informations de texte chiffré et des secondes informations de texte chiffré au dispositif de service, dans lequel le dispositif de service stocke une clé privée chiffrée asymétrique correspondant à la clé publique cryptographique asymétrique, et le dispositif de service obtient les informations de texte en clair après le déchiffrement des premières informations de texte chiffré et des secondes informations de texte chiffré, et ouvre la fonction Find Device lorsque le jeton d'ouverture de session correspond au mot de passe d'ouverture de session et se trouve dans une période de validité.

2. Procédé selon la revendication 1, dans lequel l'acquisition (307) d'une clé publique cryptographique asymétrique correspondant au dispositif de service comprend :
l'acquisition d'une clé publique cryptographique asymétrique pré-stockée.

3. Procédé selon la revendication 1, dans lequel l'acquisition (307) d'une clé publique cryptographique asymétrique correspondant au dispositif de service comprend :
l'acquisition d'informations de mise à jour de système ; et
la recherche d'une clé publique cryptographique asymétrique à partir des informations de mise à jour de système.

4. Procédé selon l'une quelconque des revendications 1 à 3, dans lequel il existe différentes clés symétriques correspondant à au moins deux opérations d'ouverture.

5. Procédé selon l'une quelconque des revendications 1 à 4, dans lequel les premières informations de texte chiffré et les secondes informations de texte chiffré sont transmises au dispositif de service en même temps.

6. Procédé selon l'une quelconque des revendications 1 à 5, dans lequel la transmission (309) des premières informations de texte chiffré et des secondes informations de texte chiffré au dispositif de service comprend :
la transmission des premières informations de texte chiffré et des secondes informations de texte chiffré à un dispositif de service en utilisant une connexion chiffrée préétablie.

7. Procédé selon la revendication 6, dans lequel la connexion chiffrée préétablie est une connexion chiffrée https.

8. Procédé de réception d'informations qui comprend un dispositif de service :
la vérification (302) d'un compte utilisateur et d'un mot de passe d'ouverture de session envoyé à partir d'un dispositif terminal en utilisant une connexion chiffrée, et le renvoi d'un jeton d'ouverture de session au dispositif terminal après la réussite de la vérification, dans lequel le jeton d'ouverture de session présente une période de validité ; le dispositif terminal passe d'une interface d'ouverture de session à une interface permettant d'ouvrir la fonction Find Device, combine le mot de passe d'ouverture de session, une identité de dispositif, un numéro de téléphone mobile et le jeton d'ouverture de session en un élément des informations de texte en clair, et obtient des premières informations de texte chiffré et des secondes informations de texte chiffré en chiffrant les informations de texte en clair et une clé symétrique correspondant à l'opération d'ouverture en cours ;
la réception (310) des premières informations de texte chiffré et des secondes informations de texte chiffré ;
l'acquisition (311) d'une clé privée de chiffrement asymétrique ;
le déchiffrement (312) des secondes informations de texte chiffré en utilisant la clé privée de chiffrement asymétrique pour obtenir la clé symétrique ; et
le déchiffrement (313) des premières informations de texte chiffré en utilisant la clé symétrique pour obtenir les informations de texte en clair ;
la vérification (314) pour savoir si le jeton d'ouverture de session correspond au mot de passe d'ouverture de session ;
la vérification (315) pour savoir si le jeton d'ouverture de session se trouve dans la période de validité, lorsque le jeton d'ouverture de session correspond au mot de passe d'ouverture de session ;
l'ouverture de la fonction Find Device et l'établissement (316) d'une relation de liaison entre l'identité de dispositif et le numéro de téléphone mobile, lorsque le jeton d'ouverture de session se trouve dans la période de validité.

9. Procédé selon la revendication 8, dans lequel les premières informations de texte chiffré et les secondes informations de texte chiffré sont reçues simultanément.

10. Procédé selon la revendication 8, comprenant en outre :
le renvoi d'un message d'échec à un dispositif terminal lorsque le jeton d'ouverture de session ne parvient pas à correspondre au mot de passe d'ouverture de session.

11. Procédé selon la revendication 10, comprenant en outre :
le renvoi d'un autre message d'échec au dispositif terminal lorsque le jeton d'ouverture de session ne se trouve pas dans la période de validité.

12. Procédé selon l'une quelconque des revendications 8 à 11, avant l'acquisition (311) d'une clé privée de chiffrement asymétrique, le procédé comprenant en outre :
l'acquisition d'informations de mise à jour de système, dans lequel les informations de mise à jour de système acheminent une clé publique chiffrée asymétrique correspondant à la clé privée chiffrée asymétrique.

13. Procédé selon l'une quelconque des revendications 8 à 12, dans lequel la réception (310) des premières informations de texte chiffré et des secondes informations de texte chiffré comprend :
la réception des premières informations de texte chiffré et des secondes informations de texte chiffré en utilisant une connexion chiffrée préétablie.

14. Procédé selon la revendication 13, dans lequel la connexion chiffrée préétablie est une connexion chiffrée https.

15. Dispositif terminal (700), comprenant un processeur (780) et une mémoire (720), dans lequel la mémoire (720) possède un ou plusieurs programmes qui y sont stockés, le ou les programmes étant configurés pour être exécutés par le processeur (780) en vue de mettre en œuvre le procédé de transmission d'informations selon l'une quelconque des revendications 1 à 7.
